# DEMANDE DE BREVET EUROPEEN

(11) **EP 1 265 393 A1**
(43) Date de publication de la demande: **11.12.2002**
(21) Numéro de dépôt: 02354090.9
(22) Date de dépôt: 05.06.2002
(51) Int. Cl.: H04L 5/02, H04L 27/26, H04B 3/54

(54) **Transmission de données en maitre-esclave en multiplexage par division de fréquences orthogonales**

(30) Priorité: 06.06.2001 FR 0107393
(71) Demandeur: STMicroelectronics S.A., 92120 Montrouge (FR)
(72) Inventeur: Mestdagh, Denis J., 38410 Saint Martin d'Uriage (FR)
(74) Mandataire: de Beaumont, Michel

(57) **Abrégé**

L'invention concerne une transmission de données entre un modem maître (Mm) et au moins un modem esclave (Mi, Mj) d'un réseau maître-esclave en multiplexage par division de fréquences orthogonales, consistant à allouer à chaque modem esclave au moins une bande de fréquences d'émission et au moins une bande de fréquences de réception choisies dans une gamme de fréquences susceptibles d'être traitées par le modem maître, et dans chaque modem esclave : à sur-échantillonner, respectivement sous-échantillonner, chaque symbole émis ou reçu ; et à filtrer en amont du sur-échantillonnage, respectivement sous-échantillonnage, au moyen d'un filtre passe-bande de la bande de fréquences allouée correspondante.

## Description

La présente invention concerne le domaine des réseaux de communication multipoints-multipoints à milieu partagé.

L'invention sera décrite par la suite en relation avec un exemple d'application aux réseaux utilisant les conducteurs d'alimentation électriques (le secteur) comme support de transmission. On utilise généralement des sous-porteuses haute fréquence qui sont modulées pour transmettre des données entre deux ou plusieurs appareils équipés de modems (modulateur-démodulateur) et raccordés au secteur. De tels réseaux peuvent être utilisés par exemple, pour connecter un micro-ordinateur à ses périphériques (imprimante, numériseur, etc.). Ils peuvent également distribuer, à l'intérieur d'une habitation, d'un bureau ou analogue, des données multimédias issues d'une connexion à un accès extérieur par exemple, une antenne satellite, un câble de fibres optiques, un modem câble, un modem XDSL, etc.

Comme plusieurs dispositifs peuvent avoir besoin simultanément de transmettre des informations sur le réseau partagé, un mécanisme de contrôle d'accès du moyen de transmission (MAC) est nécessaire pour éviter des collisions qui conduiraient à des pertes d'informations. De plus, comme différents services multimédias ou types de transmission sont susceptibles d'utiliser des mêmes conducteurs d'alimentation électriques et que ces différentes transmissions ont le plus souvent des contraintes distinctes en termes de retard, de taux d'erreur de bit etc., on a généralement recours à un mécanisme de gestion de priorité d'accès désigné plus généralement par contrôle de la qualité du service (QOS).

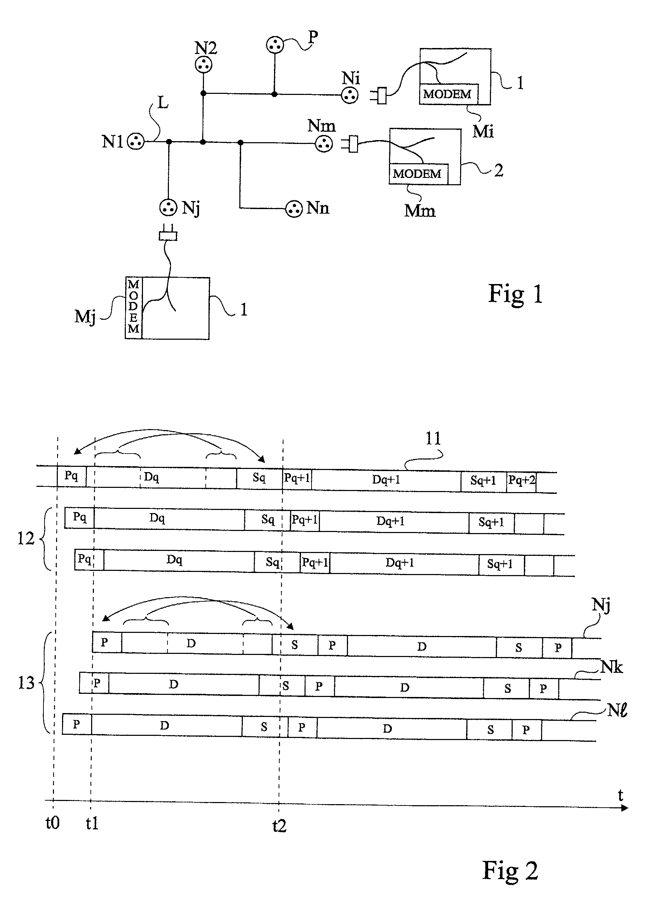

La figure 1 représente, de façon très schématique, un exemple d'architecture d'un réseau de transmission utilisant des conducteurs L d'alimentation électrique comme support de transmission. Le réseau de distribution électrique relie différentes prises P entre elles, le cas échéant par l'intermédiaire d'un tableau de répartition d'alimentation électrique pourvu de disjoncteurs ou analogues (non représentés). Les prises P ont été symbolisées en figure 1 comme étant des prises à trois conducteurs (phase, neutre et terre). Toutefois, il pourra s'agir également de prises ne disposant que de deux conducteurs (phase et neutre). Du point de vue du réseau de transmission, chaque prise est considérée comme un noeud N1, ..., ..., Ni, ..., Nj, ..., Nn.

Parmi les divers appareils électriques connectés au réseau, des appareils 1 sont équipés d'un modem Mi, Mj respectivement connectés aux noeuds Ni, Nj pour communiquer sur le réseau. Dans l'exemple de la figure 1, un appareil 2 raccordé sur une des prises est un appareil dit "maître" dont le modem Mm est connecté à un noeud Nm du réseau. Il s'agit donc d'un réseau de type maître-esclave où tous les appareils 1 sont esclaves de l'appareil 2 qui gère les transmissions et par lequel elles passent toutes.

Le plus souvent, chaque appareil 1 du premier type connecté à n'importe quelle prise du point de vue de l'alimentation électrique (noeud du point de vue du réseau) doit pouvoir envoyer et recevoir des données. L'appareil maître 2 reçoit toutes les transmissions et se charge éventuellement de les redistribuer. Toutes les émissions des postes esclaves sont donc à destination du noeud maître. Le réseau est un réseau dit point-multipoints.

Les protocoles de transmission de données sur des réseaux partagés peuvent être regroupés en trois grandes catégories. Une première catégorie concerne les accès multiples par division du temps (TDMA ou TDD) qui allouent des créneaux temporels différents à chaque transmission. Une deuxième catégorie regroupe les accès multiples par division du code (CDMA) qui allouent des codes différents pour chaque transmission. Une troisième catégorie concerne les accès multiples par division de fréquence (FDMA ou FDD) qui allouent une ou plusieurs fréquences à chaque transmission.

La présente invention concerne plus particulièrement une transmission par division de fréquence. Chaque dispositif se voit allouer un jeu prédéfini de fréquences pour émettre des données. Côté réception, il existe deux solutions. Soit, on utilise un canal de contrôle des communications pour indiquer quelles fréquences doivent être reçues et démodulées par chaque dispositif connecté au réseau point-multipoints. Soit, toutes les fréquences de réception sont démodulées par tous les dispositifs et chaque dispositif de réception choisit les informations qui lui sont destinées.

Un inconvénient de l'accès multiple par division de fréquence classique est qu'il requiert des filtres analogiques pour séparer les fréquences ou les groupes de fréquences utilisés pour les sections d'émission et de réception des modems. Cela constitue un inconvénient majeur en terme de flexibilité et de capacité d'adaptation en fréquence dans la mesure où les filtres analogiques qui sont réalisés ne peuvent pas être modifiés en fonction des besoins de capacités dynamiques ou de tout autre raison requérant de modifier les fréquences allouées. A cet égard, une particularité des réseaux utilisant les conducteurs d'alimentation comme support de transmission est que la fonction de transfert du réseau est susceptible de varier fortement, par exemple, au branchement d'un appareil électrique (qu'il soit ou non équipé d'un modem) sur le secteur.

Classiquement, les normes relatives aux réseaux utilisant le secteur d'alimentation comme support de transmission prévoient l'utilisation combinée d'un accès multiple par division de fréquence et d'un accès multiple par division du temps. Il s'agit en fait d'un accès multiple à détection de porteuse et détection de collision ou anti-collision (CSMA/CA). Selon ces normes de transmission, l'accès multiple par division de fréquence est réalisé en utilisant un multiplexage par division de fréquences orthogonales (OFDM).

Il s'agit d'une technique parfaitement connue qui sera brièvement rappelée ci-après. On pourra également se référer à la littérature. Par exemple, l'article "HomePlug Standard Brings Networking to the Home" de Steve Gardner, Brian Markwalter et Larry Yonge, paru en décembre 2000 dans Communication Systems Design, expose l'application d'un tel multiplexage aux réseaux utilisant les câbles d'alimentation électrique comme support de transmission.

Les formes d'ondes OFDM sont générées en utilisant des transformées de Fourier inverses (IFFT) dans lesquelles les points du domaine fréquentiel sont constitués de jeux de symboles complexes qui modulent chaque porteuse. Le résultat de la transformée de Fourier inverse est appelé un symbole OFDM. Côté réception, les données sont reconstituées à partir d'une transformée de Fourier directe qui convertit le symbole OFDM dans le domaine fréquentiel.

Dans une architecture où tous les appareils sont identiques, chaque appareil doit pouvoir, dans son modem, isoler toutes les fréquences ou bandes de fréquences allouées. Pour utiliser un modem simplifié, on a généralement recours à une architecture maître-esclave où seul le modem maître doit pouvoir recevoir toutes les fréquences.

La présente invention vise à proposer un nouveau procédé de transmission dans un réseau maître-esclave.

La présente invention vise également à proposer une nouvelle technique de transmission de données en multiplexage par division de fréquences orthogonales qui évite le recours à des filtres analogiques pour séparer les bandes de fréquences utilisées par les modems.

L'invention s'inspire d'une technique de transmission connue en téléphonie qui est réputée être plus flexible en terme d'allocation de fréquences. Cette technique, connue sous le nom Zipper-DMT, n'est classiquement utilisée que pour des transmissions point à point et est décrite, par exemple, dans la demande de brevet européen N° 0 883 944 et dans l'article "Zipper VDSL: A Solution for Robust Duplex Communication over Telephone Lines" de Denis J. G. Mestdagh, Mikael R. Isaksson et Per Ödling, paru en mai 2000 dans la revue IEEE Communications Magazine, pages 90 à 96.

Dans l'application à des systèmes de communication point à point, on alloue des bandes de fréquences différentes pour l'émission et la réception (sens montant, sens descendant). Dans cette application connue à la téléphonie, les bandes de fréquences allouées sont les mêmes pour tous les fils d'un même câble et, pour éviter un phénomène de diaphonie, les fréquences ne sont pas allouées aux différents modems mais aux différents câbles.

Cette technique prometteuse n'est toutefois pas directement transposable aux réseaux utilisant le secteur d'alimentation électrique comme support de transmission.

Parmi les problèmes supplémentaires rencontrés dans ce type de réseau qui rendent l'application de la technique Zipper-DMT classique inadaptée, on notera le fait que la fonction de transfert du support de transmission varie considérablement en fonction du temps (par exemple, sous l'effet d'un branchement d'un appareil électrique), que la fonction de transfert varie d'un noeud à l'autre, et le fait qu'il s'agit d'un réseau multitrajets et multiréflexions.

La présente invention vise plus particulièrement à permettre l'application, aux réseaux point-multipoints ou multipoints-point du type maître-esclave à plus de deux noeuds, de la technique Zipper-DMT connue dans les réseaux point à point.

Dans une application aux architectures maître-esclave, la distribution d'une gamme de fréquences parmi les appareils du réseau pose des problèmes particuliers. Un premier problème est le maintien de l'orthogonalité des fréquences (porteuses). Un deuxième problème est la nécessité du recours à des filtres analogiques, donc une perte de flexibilité. C'est notamment pourquoi, on a classiquement recours à une répartition temporelle selon les différents modems.

L'invention vise également à permettre une allocation fréquentielle dynamique à la fois pour la transmission et la réception sur chaque noeud du réseau.

L'invention vise en outre à supprimer les temps morts dans les transmissions.

Pour atteindre ces objets et d'autres, la présente invention prévoit un procédé de transmission de données entre un modem maître et au moins un modem esclave d'un réseau maître-esclave en multiplexage par division de fréquences orthogonales, consistant :
à allouer à chaque modem esclave au moins une bande de fréquences d'émission et au moins une bande de fréquences de réception choisies dans une gamme de fréquences susceptibles d'être traitées par le modem maître ; et
dans chaque modem esclave :
à sur-échantillonner, respectivement sous-échantillonner, chaque symbole émis ou reçu ; et
à filtrer en aval du sur-échantillonnage, respectivement en amont du sous-échantillonnage, au moyen d'un filtre passe-bande de la bande de fréquences allouée correspondante.

Selon un mode de réalisation de la présente invention, les rapports de sur-échantillonnage et de sous-échantillonnage sont différents pour chaque modem esclave et sont choisis en fonction des bandes de fréquences allouées.

Selon un mode de réalisation de la présente invention, on adjoint, à chaque symbole transmis, un préfixe cyclique et un suffixe cyclique reproduisant un nombre prédéterminé d'échantillons, respectivement de la fin et du début du symbole.

Selon un mode de réalisation de la présente invention, le support de transmission du réseau est constitué par le réseau d'alimentation électrique.

Selon un mode de réalisation de la présente invention, les instants de début de transmission des symboles depuis tous les noeuds sont synchronisés.

Selon un mode de réalisation de la présente invention, on utilise un canal de communication spécifique pour synchroniser les émissions des différents modems.

Selon un mode de réalisation de la présente invention, on met en forme les symboles (OFDM) à transmettre de façon à éviter des interférences inter-porteuses.

La présente invention prévoit également un modem esclave d'un réseau maître-esclave en multiplexage par division de fréquences orthogonales, comportant, en émission entre un circuit numérique délivrant des symboles OFDM à transmettre et une tête analogique d'émission-réception, un sur-échantillonneur et un filtre passe-bande programmable.

La présente invention prévoit également un modem esclave d'un réseau maître-esclave en multiplexage par division de fréquences orthogonales, comportant, en réception entre une tête analogique d'émission-réception et un circuit numérique traitant des symboles OFDM, un filtre passe-bande programmable et un sous-échantillonneur.

Selon un mode de réalisation de la présente invention, le rapport de sur-échantillonnage ou sous-échantillonnage est choisi en fonction d'une ou plusieurs bandes de fréquences allouées au modem.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment représente, de façon très schématique, un réseau utilisant les lignes d'alimentation électrique comme support de transmission ;
la figure 2 illustre, sous forme de chronogrammes, un mode de mise en oeuvre de la présente invention ;
les figures 3A et 3B illustrent, sous forme de schéma-blocs fonctionnels, un mode de réalisation de la présente invention, côté noeud maître ;
les figures 4A et 4B illustrent, sous forme de schéma-blocs fonctionnels, un mode de réalisation de la présente invention, côté noeud esclave ; et
les figures 5A à 5D illustrent, sous forme de chronogrammes, le fonctionnement de la présente invention, côté noeud esclave.

Les mêmes éléments ont été désignés par les mêmes références aux différentes figures. Pour des raisons de clarté, seuls les éléments et les étapes du procédé qui sont utiles à la compréhension de l'invention ont été représentés aux figures et seront décrits par la suite. En particulier, les données à transmettre et leur codage éventuel n'ont pas été détaillés et ne font pas l'objet de la présente invention. Les données à transmettre et le codage éventuel de ces données ainsi que leurs protocoles de transmission dépendent des applications, et l'invention pourra être mise en oeuvre quels que soient ces types de données et protocoles de transmission. De plus, les mécanismes de contrôle d'accès et autres mécanismes nécessaires au fonctionnement du réseau (par exemple, gestion de priorité, etc.) n'ont pas été détaillés et ne font pas non plus l'objet de la présente invention. L'adaptation éventuelle de ces mécanismes pour la mise en oeuvre de l'invention fait appel à des techniques parfaitement connues à la portée de l'homme du métier.

En outre, on ne décrira que les traitements appliqués entre la transformée de Fourier (inverse en émission ou directe en réception) et la tête d'émission-réception analogique raccordée à la prise. Les autres traitements en amont pour l'émission (respectivement en aval pour la réception) de la transformée de Fourier sont classiques et ne font pas l'objet de l'invention.

Selon l'invention, chaque noeud esclave du réseau se voit allouer un jeu de fréquences pour ses émissions et un jeu de fréquences de réception. Les jeux de fréquences d'émission et de réception sont différents pour chaque noeud et les fréquences d'émission sont différentes des fréquences de réception pour un même noeud. Ces allocations de fréquence d'émission et de réception pour chaque noeud sont gérées par le mécanisme de contrôle d'accès du réseau. Seul le noeud maître est capable de recevoir et d'émettre sur tous les jeux de fréquences.

Une caractéristique de la présente invention est de prévoir, dans le flux de transmission, un préfixe et un suffixe cycliques pour chaque symbole transmis. Cela revient à, dans le domaine temporel et à l'émission de chaque symbole, reproduire un nombre prédéterminé d'échantillons, respectivement de la fin et du début du symbole, et à insérer ces reproductions au début et à la fin du symbole pour remplir les intervalles inter-symboles. Le nombre d'échantillons reproduits (ou la durée des préfixes et suffixes) est le même pour tous les flux de transmission, mais les préfixes peuvent avoir des durées différentes de celles des suffixes.

Le préfixe cyclique de chaque symbole revient, dans le domaine temporel, à prévoir une réplique des quelques dernières micro-secondes du symbole OFDM que l'on recopie avant le symbole, dans le segment séparant deux symboles. Le rôle du préfixe cyclique est d'absorber les interférences inter-symboles qui viennent du fait que le retard d'un canal n'est pas constant avec la fréquence (c'est-à-dire réponse impulsionnelle du canal de transmission). Le recours à un préfixe cyclique pour des symboles OFDM dans un réseau utilisant le secteur comme support de transmission est connu de l'article "HomePlug Standard Brings Networking to the Home" susmentionné.

Le préfixe et le suffixe prévus par l'invention servent à éviter le recours à des filtres analogiques. En effet, en répétant une partie des données en début et en fin de symbole, on évite les discontinuités en réception de différents symboles reçus simultanément par différents noeuds. De telles discontinuités se traduisent, côté réception lors de la transformée de Fourier directe, par du bruit s'étendant sur les fréquences (porteuses) adjacentes, ce qui est néfaste à une réception correcte. Comme, selon l'invention, les temps morts entre symboles sont remplis dans le domaine temporel par les données répétées et que le fonctionnement d'une transformée de Fourier directe est cyclique, le point de départ de prise en compte d'un symbole peut varier à l'intérieur de l'intervalle contenant le signal, c'est-à-dire la durée du symbole plus les préfixes et suffixes, sans qu'aucune information soit perdue. Cela revient à dire que les porteuses des différents symboles conservent leur orthogonalité dans le domaine fréquentiel. On peut donc ne plus recourir à des filtres analogiques mais se contenter de démoduler les fréquences de réception allouées au récepteur. Cela est rendu possible car, de plus, chaque modem (plus généralement, chaque noeud) se voit allouer un jeu de fréquences d'émission et un jeu de fréquences de réception.

De plus, on évite le recours à un accès multiple par division du temps, ce qui a pour conséquence une plus grande capacité globale, ainsi qu'un contrôle de priorité et de gestion de qualité de service plus efficace.

La figure 2 illustre, par des chronogrammes schématiques, un mode de mise en oeuvre de la présente invention.

On suppose un flux 11 de transmission de données, émis par le noeud Nᵢ à un instant t0. Ce flux contient successivement des symboles OFDM Dq, Dq+1. Chaque symbole est précédé du symbole précédant ou suivant par un segment dans lequel est recopiée une partie de chacun des symboles voisins. En pratique et selon la présente invention, chaque symbole Dq est précédé par un préfixe Pq reproduisant un intervalle de temps correspondant à la fin du symbole Dq et est suivi d'un suffixe Sq correspondant à une recopie du début du symbole Dq.

Dans le domaine temporel, d'autres flux de données à des fréquences différentes se chevauchent sur le noeud de réception Ni. Comme l'illustre la figure 2, ces chevauchements proviennent tout d'abord de réflexions 12 du flux émis 11. Ces réflexions constituent bien évidemment temporellement des reproductions du flux d'origine 11 retardées dans le temps en fonction des temps de propagation. Pour simplifier, seules deux réflexions 12 ont été représentées. On notera toutefois que ces réflexions sont multiples dans un tel réseau.

D'autres interférences sont constituées par les flux de symboles 13 émis par d'autres noeuds du réseau. Dans l'exemple de la figure 2, on a représenté trois flux 13 correspondant à des émissions de noeuds Nj, Nk et Nl. La structure de chaque flux de données est la même que celle exposée pour le flux 11, c'est-à-dire comprend à chaque fois un préfixe P et un suffixe S associés à chaque symbole. Bien sûr, des réflexions multiples des flux 13 parviennent également au noeud Ni.

Les fréquences dans lesquelles sont transmis les flux 13 sont différentes pour chacun de ces flux et différentes des fréquences dans lesquelles est transmis le flux 11. Par conséquent, côté noeud Ni, on peut réceptionner sans difficultés la ou les fréquences de réception qui lui sont allouées. Il suffit que la fenêtre de réception soit comprise entre les instants t1 et t2 entre lesquels seul les symboles de même rang (q) sont présents. La détermination de la fenêtre de réception à l'intérieur de la plage t1-t2 se fait dans une phase classique d'initialisation (synchronisation temporelle) au début de chaque communication et peut être adaptée (recalée) en cours de communication.

On notera que, une fois repassé en domaine fréquentiel (après la transformée de Fourier directe), le fait que les données modulées récupérées proviennent du corps D du symbole ou du suffixe S n'a plus aucune importance.

La longueur du suffixe cyclique est choisie en fonction des délais de propagation du réseau et, plus précisément, du délai de réflexion ou de réception des signaux sur un noeud donné.

Selon un mode de réalisation préféré, correspondant à l'illustration de la figure 2, l'émission des différents modems est synchronisée de sorte que tous les modems connectés aux noeuds du réseau émettent en même temps. Dans ce cas, la durée du suffixe cyclique peut être avantageusement limitée à une fois le temps de propagation maximal du réseau, en tenant compte de toutes les réflexions et de tous les trajets (multitrajets) possibles.

Selon un autre mode de réalisation encore plus préféré, on évite le recours à une synchronisation des émissions en mettant en forme les symboles OFDM à transmettre de façon à éviter, en réception sur un même noeud, les interférences inter-porteuses de plusieurs symboles émis par des noeuds différents. Une telle technique de mise en forme ("shaping") est parfaitement connue dans d'autres domaines d'application des symboles OFDM comme, par exemple, la réception de signaux vidéo sur des antennes de réception de signaux hertziens terrestres (antenne en râteau) ou la téléphonie, et est décrite, par exemple, dans l'article "Zipper VDSL: A Solution for Robust Duplex Communication over Telephone Lines" susmentionné. Une telle mise en forme impose de grouper les porteuses de chaque jeu alloué à chaque noeud, ce qui est le cas dans l'invention.

On notera qu'il est indispensable que tous les symboles OFDM aient la même longueur (durée T). Cette longueur est définie par l'écart Δf entre deux porteuses successives de la modulation en quadrature d'amplitude et de phase (T = 1/Δf).

De façon classique, pour éviter le recours à des égaliseurs complexes en réception et éviter des interférences inter-symboles, la durée des préfixes cycliques est supérieure (au moins égale) à la réponse impulsionnelle du réseau de transmission.

Selon l'invention, le noeud maître est capable de démoduler toutes les fréquences de transmissions et est également capable d'émettre sur toutes les fréquences. Par contre, chaque noeud esclave se voit attribuer un jeu de fréquences d'émission et un jeu de fréquence de réception. Les jeux de fréquences sont regroupés par bandes pour chaque émetteur-récepteur.

Les allocations de fréquences elles-mêmes ne font pas partie de l'invention et sont effectuées par des moyens classiques. En particulier, ces allocations de fréquences sont effectuées en tenant compte du fait que la modulation est une modulation d'amplitude et quadrature de phase. On peut recourir à des constellations de plus ou moins de points (par exemple, compris entre 4 et 1024 points) selon le rapport signal/bruit. On veillera seulement de façon parfaitement classique à ne pas chevaucher le point de constellation voisin par le bruit du point concerné.

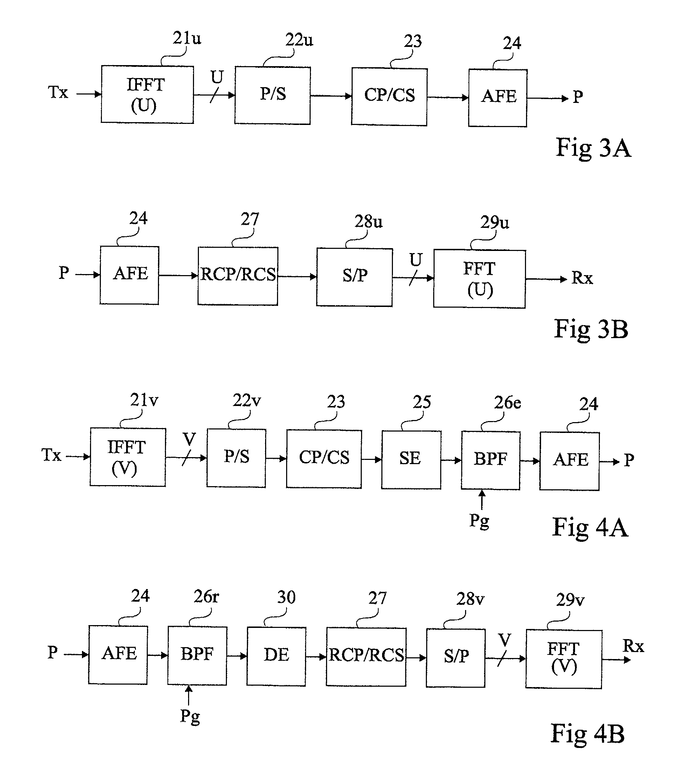

Les figures 3A et 3B représentent partiellement, par des schéma-blocs fonctionnels, les circuits mis en jeu, respectivement en émission et en réception, selon un mode de réalisation d'un modem maître de l'invention.

Les figures 4A et 4B représentent partiellement, par des schéma-blocs fonctionnels, les circuits mis en jeu, respectivement en émission et en réception, selon un mode de réalisation d'un modem esclave de l'invention.

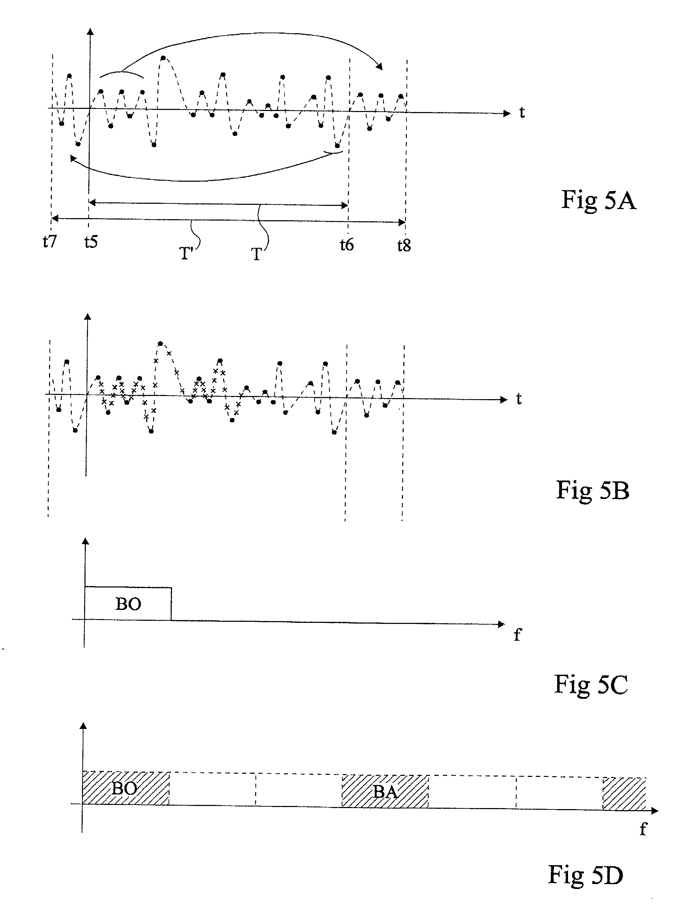

Ces figures seront exposées en relation avec les figures 5A à 5D qui illustrent, sous forme de chronogrammes, certaines allures de signaux caractéristiques de l'invention.

Que ce soit dans le modem maître ou dans un modem esclave, un signal numérique à émettre Tx (figure 3A ou 4A) est appliqué en entrée d'un circuit 21u, respectivement 21v, appliquant une transformée de Fourier inverse (IFFT). Ce qui distingue ici le circuit maître des circuits esclaves est que, dans le circuit maître 21u, la transformée est effectuée sur U entrées alors que dans chaque circuit esclave 21v, la transformée n'est effectuée que sur V entrées, avec U = n * V, où n représente le nombre maximum de modems esclaves susceptibles d'être gérés par le noeud maître.

Les U ou V sorties des circuits 21u, respectivement 21v, sont sérialisées dans un convertisseur (P/S), respectivement 22u ou 22v.

La sortie du convertisseur 22u ou 22v est reliée à l'entrée d'un circuit de traitement 23 (CP/CS) de mise en forme du signal temporel selon l'invention. Ce circuit 23 introduit les préfixes et suffixes cycliques dans les intervalles séparant deux symboles OFDM dans le domaine temporel.

La figure 5A illustre le traitement opéré par les circuits 23, que ce soit dans les modems esclaves ou dans le modem maître. Cette figure représente, de façon plus détaillée, un flux de données du type de ceux illustrés par la figure 2. Le symbole OFDM proprement dit est compris entre des instants t5 et t6. La fin du symbole est recopiée au début, entre un instant t7 et l'instant t5. Le début du symbole est recopié à la fin, entre l'instant t6 et un instant t8. Quel que soit le modem émetteur, la durée T (instants t5 à t6) du symbole OFDM et la durée T' (instants t7 à t8) incluant les préfixes et suffixes sont toujours les mêmes.

Comme l'illustre la figure 5A, on notera que le traitement est toujours numérique. C'est pourquoi le symbole a été représenté sous forme d'une succession de points constituant des échantillons numériques sur une courbe tracée en pointillés illustrant le signal analogique correspondant.

Dans le cas du modem maître, la sortie du circuit 23 est reliée directement à l'entrée de la tête analogique 24 (AFE) du modem dont le rôle, parfaitement classique, est de convertir des échantillons numériques en signal analogique qu'elle envoi sur la prise P.

Dans le cas d'un modem esclave (figure 4A), on prévoit selon l'invention un sur-échantillonnage (SE) du flux de données issu du circuit 23. Ce sur-échantillonnage est opéré dans un circuit 25.

La figure 5B illustre, dans le domaine temporel, un sur-échantillonnage opéré selon l'invention sur le signal numérique de la figure 5A. Cela revient à définir des points intermédiaires (croix) sur la courbe en pointillés de la figure 5A. Par souci de clarté, ces points intermédiaires n'ont été représentés que partiellement en figure 5B.

Dans le domaine fréquentiel, un sur-échantillonnage recopie le symbole dans des bandes de fréquences supérieures avec une périodicité fonction du rapport de sur-échantillonnage.

Ce rapport de sur-échantillonnage est, selon l'invention, propre à chaque modem esclave. Il est fixé par le modem maître en fonction de la bande de fréquences allouée au modem esclave concerné.

Les figures 5C et 5D représentent les équivalents fréquentiels des figures 5A et 5B, respectivement. On suppose que le rapport de sur-échantillonnage est 3 (introduit 3 points supplémentaires entre deux points issus de la transformée de Fourier inverse). En figure 5C, la bande de fréquence d'origine BO est donc répliquée avec une périodicité de 3 fois pour donner des bandes de fréquences successives et disjointes (hachures en figure 5D).

En sortie du circuit 25 de sur-échantillonnage, le signal (numérique) est appliqué à un filtre passe-bande 26e (BPF) programmable par un signal Pg et dont le rôle est de sélectionner la bande de fréquence BA selon la bande allouée au modem esclave concerné. Le filtre élimine non seulement la bande d'origine présente en sortie du sur-échantillonneur, mais également les répétitions de fréquences supérieures.

Ainsi, selon l'invention, l'allocation des bandes de fréquences aux modems esclaves est effectuée par le rapport du sur-échantillonnage et par programmation du filtre passe-bande.

On notera que toutes les bandes allouées BA ont la même largeur dans la mesure où elles sont toutes issues d'une bande d'origine identique.

Dans l'exemple de la figure 5D, on suppose que le filtre 25 est programmé sur la première réplique. En variante, on pourra sélectionner une réplique d'ordre supérieur.

La sortie du filtre 26 est envoyée sur la tête analogique 24 du modem. On voit que seule la bande de fréquences allouée BA est transmise, les autres répliques de la bande d'origine BO ayant été filtrées.

La réception s'effectue de façon similaire.

Pour le modem maître (figure 3B), la sortie de la tête analogique 24 (AFE) est directement reliée à un circuit 27 (RCP/RCF) dont le rôle est de supprimer les préfixes et suffixes cycliques.

La sortie du circuit 27 est envoyée sur un convertisseur 28u série-parallèle (S/P) dont les U sorties sont envoyées sur un circuit 29u opérant une transformée de Fourier directe (FFT) sur U points et fournissant le signal reçu Rx.

Pour les modems esclaves (figure 4B), un filtre passe-bande 26r (BPF) programmable (signal Pg) associé à un sous-échantillonneur 30 (DE) est intercalé entre la tête analogique 24 et le circuit 27 d'élimination des préfixes et suffixes. De plus, le convertisseur 28v fournit v bits au circuit 29v de transformée de Fourier directe sur V points.

Le filtre 26r est programmé pour ne laisser passer que la bande allouée en réception pour le modem esclave concerné. Ainsi, toutes les bandes émises par le modem maître et destinées aux autres modems sont éliminées. Par la suite, un sous-échantillonneur 30 ramène la bande reçue dans une bande dite de base correspondant, pour la réception, à la bande d'origine d'émission. On peut prévoir un entrelacement des fréquences d'émission et de réception pour chaque modem esclave, tout en maintenant groupées (non entrelacées) les fréquences d'émission et de réception des différents modems.

Un avantage de l'invention est que tous les modems esclaves peuvent avoir des circuits de transformée de Fourier identiques, ce qui améliore la standardisation de ces modems esclaves.

Un autre avantage de l'invention est que les circuits des modems esclaves sont de constitution simplifiée car ils n'ont pas besoin de traiter toutes les fréquences.

Seul le modem maître doit être capable de générer directement un symbole dans toute la gamme de fréquences des bandes allouées et à réceptionner toute cette gamme. Grâce aux filtrages opérés par les différents modems esclaves en émission, le modem maître est capable d'individualiser les flux de données provenant des différents modems, même si ces flux sont simultanés ou se chevauchent temporellement.

L'adaptation d'un modem esclave selon l'invention consiste à lui allouer une bande de fréquences d'émission et une bande de réception, puis à programmer ses rapports de sur-échantillonnage et de sous-échantillonnage ainsi que ses filtres passe-bande d'émission et de réception. Une telle adaptation est faite sur instructions du modem maître qui tient, en mémoire, une table d'allocation des fréquences.

Une différence importante de l'application point-multipoints, par rapport à l'application point à point de la téléphonie, est que, en téléphonie, on évite d'allouer des fréquences différentes aux différents modems afin d'éviter toute diaphonie. A l'inverse, selon la présente invention, il est indispensable d'allouer à chaque modem au moins une fréquence d'émission et au moins une fréquence de réception distinctes de celles des autres modems. Bien que l'invention puisse s'appliquer avec une seule porteuse, elle trouve surtout un intérêt dans le cas d'une modulation multiporteuses. En effet, plus les symboles sont temporellement longs, moins un suffixe couvrant les temps de propagation prend de place supplémentaire temporellement.

La synchronisation éventuelle des noeuds du réseau peut être effectuée de la façon suivante. Par exemple, on peut utiliser un canal de signalisation qui véhicule un signal de référence temporel du réseau. On suppose que tous les modems sont branchés sur des prises de raccordement secteur. A l'allumage du modem maître, celui-ci envoie de façon permanente un signal OFDM particulier constitué de données prédéfinies à destination de tous les modems esclaves. A la réception par le modem esclave, ce dernier renvoie immédiatement un signal de réponse sur une autre fréquence de signalisation prédéfinie. Lorsque le modem maître reçoit la réponse, il peut calculer la durée qui devient alors la durée de propagation qu'il renvoie dans un canal spécifique. A la réception du contenu de ce canal, le modem esclave connaît désormais la durée à appliquer pour une transmission à ses propres signaux OFDM, de sorte que les deux modems susmentionnés sont désormais capables d'émettre des signaux en même temps.

Bien entendu, la présente invention est susceptible de diverses variantes et modifications qui apparaîtront à l'homme de l'art. En particulier, la mise en oeuvre du procédé de transmission de l'invention est à la portée de l'homme du métier à partir des indications fonctionnelles données ci-dessus. De plus, bien que l'invention ait été décrite en relation plus particulière avec un réseau utilisant les câbles d'alimentation comme support de transmission, celle-ci pourra s'appliquer également à tout autre réseau point-multipoints et/ou multipoints-point dans lequel des problèmes similaires se posent. A titre d'exemple, on citera les applications aux communications sans fil dans lesquelles se posent les problèmes de variation de la fonction de transfert en fonction du temps, et qui sont multitrajets et multiréflexions. En outre, si l'allocation d'une bande de fréquences d'émission et d'une bande de fréquences de réception constitue un mode de réalisation préféré, on pourra prévoir d'allouer plusieurs bandes d'émission et de réception à chaque modem esclave. Les filtres doivent dans ce cas avoir, chacun, plusieurs bandes passantes et on doit prévoir plusieurs rapports de sur et sous-échantillonnage.

## Revendications

1. Procédé de transmission de données entre un modem maître (Mm) et au moins un modem esclave (Mi, Mj) d'un réseau maître-esclave en multiplexage par division de fréquences orthogonales, **caractérisé en ce qu'**il consiste :
à allouer à chaque modem esclave au moins une bande de fréquences d'émission et au moins une bande de fréquences de réception choisies dans une gamme de fréquences susceptibles d'être traitées par le modem maître ; et
dans chaque modem esclave :
à sur-échantillonner, respectivement sous-échantillonner, chaque symbole émis ou reçu ; et
à filtrer en aval du sur-échantillonnage, respectivement en amont du sous-échantillonnage, au moyen d'un filtre passe-bande de la bande de fréquences allouée correspondante.

2. Procédé selon la revendication 1, **caractérisé en ce que** les rapports de sur-échantillonnage et de sous-échantillonnage sont différents pour chaque modem esclave et sont choisis en fonction des bandes de fréquences allouées.

3. Procédé selon la revendication 1 ou 2, **caractérisé en ce qu'**il consiste à adjoindre, à chaque symbole transmis, un préfixe cyclique et un suffixe cyclique reproduisant un nombre prédéterminé d'échantillons, respectivement de la fin et du début du symbole.

4. Procédé selon l'une quelconque des revendications 1 à 3, **caractérisé en ce que** le support de transmission du réseau est constitué par le réseau d'alimentation électrique.

5. Procédé selon l'une quelconque des revendications 1 à 4, **caractérisé en ce que** les instants de début de transmission des symboles depuis tous les noeuds sont synchronisés.

6. Procédé selon la revendication 5, **caractérisé en ce qu'**il consiste à utiliser un canal de communication spécifique pour synchroniser les émissions des différents modems.

7. Procédé selon l'une quelconque des revendications 1 à 4, **caractérisé en ce qu'**il consiste en outre à mettre en forme les symboles (OFDM) à transmettre de façon à éviter des interférences inter-porteuses.

8. Modem esclave d'un réseau maître-esclave en multiplexage par division de fréquences orthogonales, **caractérisé en ce qu'**il comporte, en émission entre un circuit numérique (23) délivrant des symboles OFDM à transmettre et une tête analogique d'émission-réception (24), un sur-échantillonneur (25) et un filtre passe-bande programmable (26e).

9. Modem esclave d'un réseau maître-esclave en multiplexage par division de fréquences orthogonales, **caractérisé en ce qu'**il comporte, en réception entre une tête analogique d'émission-réception (24) et un circuit numérique (23) traitant des symboles OFDM, un filtre passe-bande programmable (26r) et un sous-échantillonneur (25).

10. Modem selon la revendication 8 ou 9, **caractérisé en ce que** le rapport de sur-échantillonnage ou sous-échantillonnage est choisi en fonction d'une ou plusieurs bandes de fréquences allouées au modem.
